# EUROPÄISCHE PATENTSCHRIFT

(11) **EP 4 538 669 B1**
(45) Veröffentlichungstag und Bekanntmachung des Hinweises auf die Patenterteilung: **18.11.2026**
(21) Anmeldenummer: 25160356.9
(22) Anmeldetag: 30.04.2021
(51) Int. Cl.: G01M 3/24, G01F 1/66, G01M 3/28

(54) **VERFAHREN ZUR AKUSTISCHEN LECKSUCHE IN EINEM FERNWÄRMELEITUNGSNETZ**
METHOD FOR ACOUSTIC LEAK DETECTION IN A DISTRICT HEATING NETWORK
PROCÉDÉ DE DÉTECTION ACOUSTIQUE DE FUITES DANS UN RÉSEAU DE CHAUFFAGE URBAIN

(43) Veröffentlichungstag der Anmeldung: 16.04.2025
(62) Dokumentnummer(n) der früheren Anmeldung(en) nach Art. 76 EPÜ: 21171439.9 / 4 083 591
(73) Patentinhaber: Kamstrup A/S, 8660 Skanderborg (DK)
(72) Erfinder: Dupont, Sune Hoveroust, 8660 Skanderborg (DK); Rasmussen, Morten Karstoft, 8660 Skanderborg (DK)
(74) Vertreter: Patentanwälte Hemmer Lindfeld Frese Partnerschaft mbB

(56) Entgegenhaltungen:
- WO-A1-2017/005269
- DE-U1- 202008 017 243
- US-A1- 2014 150 554
- US-A1- 2015 330 863
- US-B1- 6 389 881

## Beschreibung

Bei Trinkwasserversorgungsnetzen zählt es zum Stand der Technik, Leckagen akustisch zu orten, und zwar unter Einsatz von im Netz installierten Verbrauchsmessgeräten, z.B. des Typs flowlQ 2200 der dänischen Firma Kamstrup A/S. Derartige Hauswasserzähler erfassen den Durchfluss mittels Ultraschall, wobei die Ultraschallempfänger unter Einsatz einer speziellen Software zur Leckerkennung und Leckortung verwendet werden. Diese Ultraschalldurchflussmesser messen Leckgeräusche in einem Bereich von 1 bis 2 kHz, wenn der Ultraschalldurchflussmesser nicht zur Durchflussmessung verwendet wird, also wenn kein Durchfluss erfolgt. Ein solches Verfahren kann grundsätzlich auch in Fernwärmenetzen eingesetzt werden, wie dies in EP 3 112 823 A1 beschrieben ist. Die US 2015/330863 A1 beschreibt ein System und Verfahren zur Leckageerkennung in einem Kaltwassernetz.

Die Lecksuche und Ortung in Fernwärmeleitungsnetzen hat eine höhere Priorität als die in Kaltwassernetzen, da nämlich im Falle eines Lecks nicht nur Wasser entweicht, sondern auch die mit dem Wasser zu transportierende Wärme, wodurch ein Vielfaches der Kosten im Vergleich zu einem Leck in einem Trink- oder Brauchwasserleitungsnetz entsteht. Hinzukommt, dass Fernwärmeleitungswasser chemische Additive beinhalten, was bei einer Leckage Verunreinigung der Umgebung bedeutet.

Allerdings hat sich die akustische Leckortung in Fernwärmeleitungsnetzen bisher nicht durchgesetzt, da in einem Fernwärmenetz praktisch immer Durchfluss herrscht, weshalb die bei Kaltwassernetzen übliche akustische Leckortung, die dann erfolgt, wenn kein Durchfluss festzustellen ist, in der Praxis nicht umsetzbar ist. Erschwerend hinzu kommt, dass die Rohre von Fernwärmeleitungsnetzen stark isoliert, d.h. mit einem isolierenden Mantel umgeben sind, welcher das bei einem Leck auftretende Geräusch stark dämpft.

Zur Lecksuche in Fernwärmesystemen wird daher vorrangig die Thermografie angewandt, bei der mit manuell geführten Kameras oder Drohnen das Fernwärmenetz überirdisch abgesucht wird. Eine solche Lecksuche ist jedoch zum einen aufwendig und zum anderen nur dort möglich, wo eine ausreichend freie Sicht auf die Bodenoberfläche über der Fernwärmeleitung gegeben ist.

Darüber hinaus werden elektrische Verfahren zur Erkennung von Lecks in Fernwärmerohren verwendet. Der dänische Rohrhersteller Løgstør beispielsweise baut hierzu elektrische Drähte in die Isolierung der Rohre ein, die elektrisch miteinander verbunden werden, bevor die Rohre im Erdreich versenkt werden. Die Leckerfassung erfolgt dann durch elektrische Impedanzmessung.

Auch zählt eine Überwachungssoftware mit dem Namen "Heat Intelligence" zum Stand der Technik, welche von der dänischen Firma Kamstrup A/S vertrieben wird und im Zusammenhang mit den im Fernwärmeleitungsnetz verbauten Ultraschalldurchflussmessern arbeitet. Diese Software nutzt die Temperaturmessung der Ultraschalldurchflussmesser und ermittelt eine Leckage anhand eines festgestellten Temperatursprungs.

Vor diesem Hintergrund liegt der Erfindung die Aufgabe zugrunde, ein verbessertes Verfahren zur Lecksuche in einem Fernwärmeleitungsnetz bereitzustellen.

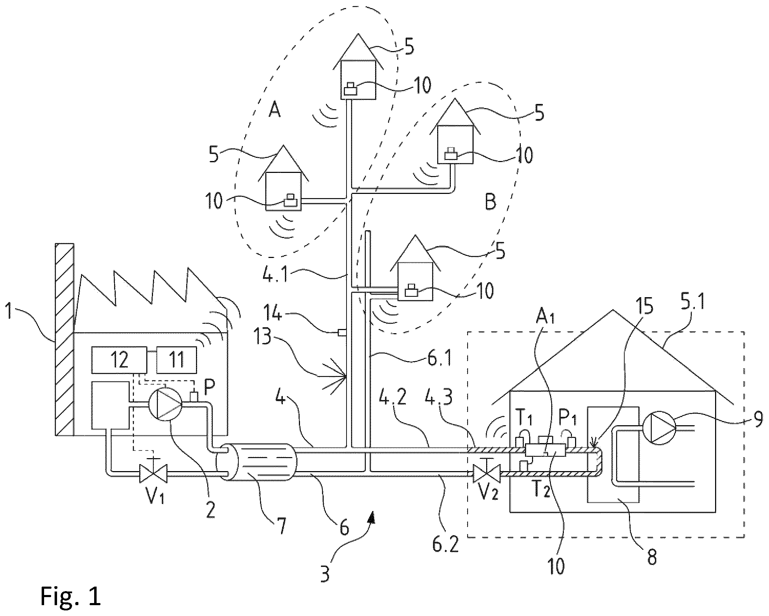

Diese Aufgabe wird gemäß der Erfindung durch ein Verfahren mit den im Anspruch 1 angegebenen Merkmalen gelöst. Vorteilhafte Ausgestaltungen des erfindungsgemäßen Verfahrens sind in den Unteransprüchen, der nachfolgenden Beschreibung und der Zeichnung angegeben. Ein Wärmemengenzähler (auch Wärmezähler oder Wärmemengenmesser genannt) zur Ausführung des erfindungsgemäßen Verfahrens ist in Anspruch 15 angegeben.

Das erfindungsgemäße Verfahren zur akustischen Lecksuche in einem Fernwärmeleitungsnetz, in dem ein Wärmeträger zwischen einem Heizkraftwerk und Verbrauchsstellen im Kreislauf geführt wird, nutzt Wärmemengenzähler, die verbrauchsstellenseitig vorgesehen sind und die mit Ultraschalldurchflussmessern arbeiten, die in einem Lecksuchemodus zur akustischen Lecksuche betreibbar sind. Gemäß der Erfindung werden die im Lecksuchemodus erfassten akustischen Signale zur Eliminierung von Fremdgeräuschen, insbesondere von Pumpengeräuschen gefiltert, wobei Fremdgeräusche anhand zuvor ermittelter akustischer Muster identifiziert und/oder hinsichtlich ihrer Richtung bestimmt und eliminiert werden.

Grundgedanke des erfindungsgemäßen Verfahrens ist es, zur Erfassung akustischer Signale zur Lecksuche, die in Wärmemengenzählern integrierten Ultraschalldurchflussmesser zu nutzen und diese im Lecksuchemodus erfassten akustischen Signale zur Eliminierung von Fremdgeräuschen, insbesondere von Pumpengeräuschen zu filtern. Dabei ist unter Filtern im Sinne der Erfindung die teilweise oder vollständige Eliminierung von Fremdgeräuschen zu verstehen, sei es, dass diese bereits aus dem akustischen Signal als solchem eliminiert werden, sei es, dass diese aus dem in ein elektrisches Signal umgewandelten akustischen Signal eliminiert werden oder sei es, dass die umgewandelten elektrischen Signale digitalisiert und in digitaler Form so aufbereitet oder weiter verarbeitet werden, dass es dem Effekt einer Filterung entspricht.

Grundsätzlich ist eine Filterung von den Fremdgeräuschen zweckmäßig, welche die Leckortung in irgendeiner Weise stören oder erschweren können. Typischerweise sind dies jedoch die Fremdgeräusche, die von Pumpen erzeugt werden, seien es die Pumpen, die heizkraftwerkseitig oder netzseitig für die Umwälzung des Wärmeträgermediums im Fernwärmeleitungsnetz sorgen aber auch die Pumpen, die verbraucherseitig arbeiten, die für die Umwälzung des Heizmediums verbraucherseitig sorgen, und zwar sowohl die auf der Primärseite als auch die auf der Sekundärseite, d.h. die vom eigentlichen Fernwärmeleitungsnetz durch Wärmetauscher getrennt. Diese Pumpengeräusche übertragen sich sowohl durch das zu fördernde Medium als auch durch das vorhandene Rohrleitungssystem, das aus Kunststoff und/oder Metall bestehen kann. Im Haus des Verbrauchers übertragen sich störende Geräusche von Pumpen, Ventilen und Durchfluss (in benachbarten Rohren) durch Beton, Wände oder Einbaukästen, z.B. ein Gehäuse einer Fernwärmeübergabestation.

Das erfindungsgemäße Lecksucheverfahren ist somit auch durchführbar bzw. insbesondere durchführbar, wenn im Leitungssystem Durchfluss herrscht. Anders als bei Trink- und Brauchwasserleitungsnetzen, die nur sporadisch Durchfluss aufweisen, wenn an einer oder mehreren Zapfstellen Wasser entnommen wird, findet bei Fernwärmeleitungsnetzen systembedingt fast immer ein Durchfluss statt, da nur bei Durchfluss ein Wärmetransport vom Heizkraftwerk zum Verbraucher gewährleistet ist. So sind selbst verbraucherseitig nur ganz vereinzelt in der warmen Jahreszeit überhaupt Durchflussstopps in der Fernwärmeleitung vorhanden. Wenn man also bei der Lecksuche außerhalb dieser Sonderzeiten tätig werden will, so ist dies bei der akustischen Lecksuche gemäß der Erfindung zwar ein Durchfluss tolerierbar, jedoch unter Eliminierung der für die Lecksuche störenden Fremdgeräusche, insbesondere soweit diese von Pumpen ausgehen und auch mit technisch vertretbarem Aufwand identifizierbar und somit ausfilterbar sind.

Dabei ist es zur akustischen Lecksuche zweckmäßig, eine Gruppe von Wärmemengenzählern anzusteuern, um ein solches Leck nicht nur festzustellen, sondern auch orten zu können, zumindest einen räumlichen Bereich festlegen zu können, wo dieses vorhanden ist. Dabei kann es zweckmäßig sein, die Lecksuche bei allen Ultraschalldurchflussmessern die zu der hierzu bestimmten Gruppe von Wärmemengenzählern gehören gleichzeitig durchzuführen, also alle Wärmemengenzähler, die zu dieser Gruppe gehören, gleichzeitig zur Lecksuche, d.h. synchronisiert anzusteuern. Eine gleichzeitige Lecksuche mit allen zur Gruppe gehörenden Wärmemengenzählern ist dann besonders vorteilhaft, wenn der Durchfluss gestoppt ist. Eine solche Unterbrechung des Durchflusses in einem Fernwärmeleitungsnetz oder einem Abschnitt eines solchen Netzes muss nur sehr kurzzeitig sein, für die akustische Lecksuche können Zeiten im Millisekundenbereich ausreichen. So haben praktische Versuche Messzeiten von 250 ms ergeben, die ohne weiteres durch Absperren von Ventilen, kurzzeitiges Abschalten von Pumpen oder dergleichen realisierbar sind. Die Messungen können jedoch auch bei geringem Durchfluss erfolgen.

Gemäß der Erfindung ist dies jedoch nicht zwingend erforderlich, da die Lecksuche gemäß einer Weiterbildung des erfindungsgemäßen Verfahrens mittels Ultraschalldurchflussmessern einer Gruppe von Wärmemengenzählern auch zeitlich versetzt, d.h. unsynchronisiert, erfolgen kann, indem die Messung in jedem Ultraschalldurchflussmesser vorzugsweise selbsttätig dann erfolgt, wenn entweder ein Durchflusstop oder ein Erreichen oder Unterschreiten eines vorbestimmten geringen Durchflusses detektiert wird. Letzteres ist in vielen Bereichen des Fernwärmeleitungsnetzes zumindest kurzzeitig gegeben. Insbesondere bei geringem Durchfluss ist die Elimination von Fremdgeräuschen wesentlich effektiver möglich als bei hohem Durchfluss. Auch geht das im Netz immer vorhandene Grundrauschen dann deutlich zurück. Da die Wärmemengenzähler durch die darin befindlichen Ultraschalldurchflussmesser stets Kenntnis über die Durchflussmenge bzw. einen Durchflussstopp haben, können diese sich quasi selbst zur Lecksuche ansteuern, sobald der gewünschte Zustand erreicht ist. Die akustische Signalerfassung erfolgt dann zeitlich gestaffelt, wobei die den Messvorgang repräsentierenden Daten auch einen Zeitstempel erhalten, um nicht nur eine räumliche, sondern auch eine zeitliche Zuordnung der Messungen in einer Gruppe oder ggf. auch in mehreren Gruppen zu ermöglichen.

Alternativ oder zusätzlich kann bei dem erfindungsgemäßen akustischen Lecksucheverfahren der Durchfluss zumindest in Teilen des Wärmeleitungsnetzes oder verbraucherseitig kurzseitig gesperrt werden. Eine solche verbraucherseitige Sperrung erfolgt vorzugsweise im Rücklauf, um verbraucherseitige Komforteinbußen auszuschließen.

Bei dem akustischen Lecksucheverfahren gemäß der Erfindung geht es stets darum, dass durch die Leckage im Leitungsnetz hervorgerufene Geräusch von den Umgebungsgeräuschen, also von Fremdgeräuschen, insbesondere Pumpengeräuschen zu unterscheiden, nur dann ist eine wirksame Leckortung möglich. Um dies zu unterstützen ist gemäß einer vorteilhaften Weiterbildung des Verfahrens gemäß der Erfindung vorgesehen, zumindest einen Teil des Fernwärmeleitungnetzes während der akustischen Lecksuche mit einem sich über die Zeit ändernden Druck zu beaufschlagen, vorzugsweise ein vorgegebenes Druckprofil aufzugeben. Grundgedanke hierbei ist es, dass das durch das Leck hervorgerufene Geräusch sowohl in seiner Frequenzverteilung als auch hinsichtlich der Amplitude druckabhängig ist. Die Beaufschlagung mit einem Druckprofil fördert somit die Unterscheidbarkeit zwischen leckbedingten Geräuschen und Fremdgeräuschen bzw. sonstigen Strömungsgeräuschen. Insbesondere können akustische Messungen in einer Zeitperiode des Profils mit hohem Druck mit akustischen Messungen in einer Zeitperiode niedrigeren Druckes verglichen werden. Das vorgegebene Druckprofil enthält vorteilhaft solche Druckunterschiede. Auch erleichtert dies die Identifizierung und Ausfilterung von Pumpengeräuschen, da das Druckprofil eine sich ändernde Pumpendrehzahl und damit auch Frequenz des Pumpengeräusches bedingt. Dieses Vorgehen hat den besonderen Vorteil, dass das Fernheizen fast unbeeinträchtigt verbleibt, denn die Lecksuche wird während des Druckflusses gemacht, nur das Druckprofil ändert sich.

Während bei der akustischen Leckortung von Trink- bzw. Brauchwasserleitungsnetzen in den Ultraschalldurchflussmessern im Lecksuchemodus akustische Signale im Frequenzbereich zwischen 1 und 2 kHz erfasst werden, so hat sich gezeigt, dass bei der Lecksuche in einem Fernwärmeleitungsnetz ein wesentlich umfänglicheres akustisches Frequenzspektrum erfasst werden sollte. Bei dem erfindungsgemäßen Verfahren wird vorteilhaft ein Frequenzbereich zwischen 10 Hz und 10 kHz erfasst. Es versteht sich, dass aufgrund dieses vergleichsweise weiteren Frequenzbereiches die Ausfilterung von Fremdgeräuschen besonders wichtig ist. Dabei geht es im Wesentlichen um die von den im Leitungsnetz befindlichen Kreiselpumpen und den davon ausgehenden Fremdgeräuschen.

Die von den Wärmemengenzählern im Lecksuchemodus ihrer Ultraschalldurchflussmesser erfassten Daten werden vorteilhaft in Form von Datensätzen vorzugsweise drahtlos an eine Datensammel- und Verarbeitungseinrichtung (Head-End-System) übermittelt. Die Kommunikation mit solchen Datensammel- und Verarbeitungseinrichtungen zählt bei Wärmemengenzählern zum Stand der Technik. Dabei kann in einfacher Form die Übermittlung von Datenpaketen in eine Richtung ausreichen, erfindungsgemäß erfolgt jedoch eine bidirektionale Kommunikation, sodass die Umschaltung in den Lecksuchemodus zentral über die Datensammel- und Verarbeitungseinrichtung erfolgt.

Datensammel- und Verarbeitungseinrichtung im Sinne der vorliegenden Erfindung muss nicht ein an einem Ort befindliches Gerät sein, es ist denkbar, dass mehrere räumlich verteilte Datensammel- und Kommunikationseinrichtungen vorgesehen sind, die mit Gruppen von Wärmemengenzählern kommunizieren und deren Daten z.B. in einem Rechenzentrum oder einem oder mehreren Rechnern weiterverarbeitet werden. Wenn solche Datensätze von Gruppen von Wärmemengenzählern auszuwerten sind, die hunderte oder tausende Wärmemengenzähler umfassen, so sind erhebliche Rechenleistungen erforderlich. Die Auswertung erfolgt deshalb typischerweise auch nicht in Echtzeit, sondern dann, wenn die Datensätze sämtlichst erfasst sind. Insbesondere bei batteriegespeisten Wärmemengenzählern bedeutet die Datenkommunikation stets einen zusätzlichen Energieverbrauch, den es zu vermeiden gilt. Es werden daher nur zu bestimmten Zeiten Daten übermittelt, wobei Kanal und Signalstärke so gewählt werden, dass möglichst geringe Sendeleistungen erforderlich sind. Entsprechend muss die Auswertung dieser Datensätze zeitlich unabhängig von der Datenerfassung erfolgen.

Soweit es die durch Pumpen im Heizkraftwerk oder Boosterpumpen innerhalb des Fernwärmeleitungsnetzes erzeugten Fremdgeräusche angeht, ist es besonders wichtig, diese zu eliminieren, da sich alle erfassten akustischen Signale sonst überlagern und die Lecksuche erschweren. Es ist daher gemäß einer Weiterbildung der Erfindung vorgesehen, mindestens eine dieser Pumpen, vorzugsweise jedoch die in diesem Bereich relevanten Pumpen zur Erfassung der bei ihrem Betrieb entstehenden akustischen Signale vorzugsweise im Lecksuchemodus des Ultraschalldurchflussmessers gezielt anzusteuern, um das dann ultraschalldurchflussmesserseitig erfasste Signal gezielt zuordnen und ausfiltern zu können. Wenn also im Lecksuchemodus einer oder mehrerer Wärmemengenzähler eine solche Pumpe gezielt angesteuert wird, kann diese signalmäßig identifiziert und ausgefiltert werden.

Die Ansteuerung erfolgt dabei entweder durch die Datensammel- und Verarbeitungseinrichtung oder aber bevorzugt durch eine Bedienperson vor Ort mittels eines externen Steuergeräts, das vorzugsweise drahtlos mit mindestens einer Pumpe und mit mindestens einem Ultraschalldurchflussmesser eines Wärmemengenzählers kommuniziert. Ein solches Steuergerät kann durch ein Smartphone mit einer entsprechend darauf installierten App gebildet sein, welches entweder über das Internet oder die Datensammel- und verarbeitungseinrichtung mit der oder den Pumpen und dem oder den Ultraschalldurchflussmessern kommuniziert oder ggf. auch direkt mit den Wärmemengenzählern kommuniziert, um die von den Ultraschalldurchflussmessern erfassten Signale entsprechend erzeugen und zuordnen zu können.

Das Eliminieren von Fremdgeräuschen durch Filtern setzt voraus, dass man diese Geräusche als Fremdgeräusche identifiziert, zuordnet und dann ggf. eliminiert. Das erfindungsgemäße Verfahren setzt insoweit also voraus, dass vor Ermittlung von Fremdgeräuschen zuvor akustische Muster gezielt ermittelt und abgelegt werden, sodass beim Erfassen von Fremdgeräuschen, die diesen akustischen Mustern entsprechen, diese identifiziert und ggf. eliminiert werden können. Dabei unterscheidet das erfindungsgemäße Verfahren vorteilhaft Fremdgeräusche, die aus dem Fernwärmeleitungsnetz kommen und solche die vom Verbraucher also von der Verbrauchsstelle kommen. Da die von der Verbrauchsstelle kommenden Fremdgeräusche häufig wesentlich näher an dem Wärmemengenzähler erzeugt werden als die aus dem Netz kommenden, ist es für die Lecksuche im Leitungsnetz sinnvoll, diese aus Richtung der Verbrauchsstelle kommenden Fremdgeräusche auszufiltern. Das erfindungsgemäße Verfahren sieht somit in einer Weiterbildung der Erfindung vor, die Richtung der Geräusche zu erfassen und dann ggf. die aus Richtung der Verbrauchsstelle kommenden Signale zu eliminieren. Die Richtungsbestimmung eines akustischen Signals kann in einem Wärmemengenzähler, der auf Ultraschallmessung basiert, dadurch gemacht werden, dass man die Amplitude, eine Geschwindigkeit oder einen Fasenwinkel des Signals an zwei Stellen misst und aus einem Unterschied zwischen den zwei Werten die Richtung bestimmt.

Wie eingangs erläutert, ist es zweckmäßig, zur Lecksuche, insbesondere zur Leckortung eine möglichst große Anzahl von Wärmemengenzählern einzusetzen, um durch Vergleich der von diesen übermittelten Datensätze ein Leck aufzufinden und ggf. dieses auch räumlich einzugrenzen. Erfindungsgemäß wird eine Anzahl von Wärmemengenzählern zur Lecksuche von der Datensammel- und Verarbeitungseinrichtung drahtlos in den Lecksuchemodus geschaltet und nach Übermittlung der Daten in den normalen Messmodus zurückgeschaltet. Das Zurückschalten kann erfindungsgemäß auch selbsttätig erfolgen, wenn die entsprechenden Daten aus dem Lecksuchemodus im Wärmemengenzähler erfasst und abgelegt sind.

Um mit dem erfindungsgemäßen Verfahren nicht nur eine Leckermittlung sondern auch eine Leckortung durchzuführen, ist es zweckmäßig, die von den Wärmemengenzählern übermittelten Leckortungsdaten entweder mit GPS-Daten auszustatten oder aber diese in der Datensammel- und Verarbeitungseinrichtung so zu hinterlegen, dass eine räumliche Bestimmung der Leckagestelle entsprechend der GPS-Daten der übermittelten Datensätze bzw. der GPS-Daten der Wärmemengenzähler, die diese Datensätze erzeugen, erfolgen kann.

Das erfindungsgemäße Verfahren wird vorzugsweise mittels mehrerer Gruppen von Wärmemengenzählern durchgeführt, wobei eine Gruppe vorzugsweise zwischen 10 bis 1000 räumlich zusammenhängende Wärmemengenzähler umfasst. Es wird in der Regel nicht sinnvoll sein, mehrere Wärmemengenzähler mit nahezu identischen GPS-Daten, wie sie beispielsweise beim Einsatz in Mehrfamilienhäusern vorliegen, zur Leckortung heranzuziehen. Dies ist in der Regel nursinnvoll für Leckortung innerhalb des Hauses, die natürlich in analoger Weise mit dem erfindungsgemäßen Verfahren durchgeführt werden kann. Für die Leckortung im Fernwärmeleitungsnetz hingegen ist es sinnvoll, nur die Wärmemengenmesser zur Leckortung einzusetzen, die sich hinsichtlich ihrer GPS-Daten hinreichend unterscheiden.

Weiterhin ist es sinnvoll, für eine solche Gruppe von Wärmemengenzählern, die zur akustischen Leckortung im Lecksuchemodus ihrer Ultraschalldurchflussmesser verwendet werden, ein Grundrauschen zu bestimmten und dieses bei allen Wärmemengenzählern in gleicher Weise auszufiltern, um die Gruppe von Wärmemengenzählern von diesem Grundrauschen zu befreien.

Zur Durchführung des erfindungsgemäßen Verfahrens wird ein Wärmemengenzählerzumindest softwaremäßig entsprechend anzupassen sein, dabei ist es insbesondere für eine bidirektionale Kommunikation mit der Datensammel- und Verarbeitungseinrichtung vorteilhaft, wenn der Wärmemengenzähler eine Sende- und Empfangseinheit zur drahtlosen bidirektionalen Kommunikation aufweist. Unter bidirektionaler Kommunikation im Sinne der vorliegenden Erfindung ist nicht die Kommunikation gemeint, die bei Übermittlung von Datensätzen die Vollständigkeit der übermittelten Datenpakete bestätigt, sondern eine solche, welche Datenübermittlung in beiden Richtungen umfasst, also insbesondere auch solche Daten, mit welchen die Wärmemengenzähler zur Lecksuche ansteuerbar sind.

Gemäß einer Weiterbildung der Erfindung kann es zweckmäßig sein, den Wärmemengenzähler mit einem Steueranschluss für ein Absperrventil auszustatten oder ein solches Absperrventil zu integrieren, um zur Verbesserung der akustischen Signalerfassung den verbrauchsseitigen Durchfluss zumindest kurzzeitig stoppen zu können.

Vorteilhaft werden bei dem erfindungsgemäßen Verfahren hauptleitungsseitig angebrachte Geräuschlogger eingesetzt, die akustische Signale zur Steuerzentrale übermitteln, um diese akustischen Signale zusammen mit akustischen Signalen von den Wärmemengenzählern zur Eliminierung von Fremdgeräuschen zu benutzen.

Weiter vorteilhaft wird die akustische Lecksuche während eines Durchflusses in einer Leitung, insbesondere einer Hauptleitung oder Vorlaufleitung durchgeführt.

Wärmemengenzähler wie sie zur Durchführung des erfindungsgemäßen Verfahrens eingesetzt werden, weisen neben einem Ultraschalldurchflussmesser typischerweise zwei Temperatursensoren für die Vorlauf- und die Rücklaufleitung auf. Gemäß einer Weiterbildung der Erfindung ist es besonders vorteilhaft, einen solchen Wärmemengenzähler intern oder extern auch mit einem Beschleunigungssensor zu versehen, über den bei der Leckortung zusätzliche Daten erfasst werden können, welche auch für die Signalbestimmung beim Ausfiltern der Fremdgeräusche von Vorteil sein können.

Wie eine Lecksuche praktisch ausgestaltet sein kann ist anhand der Figur beispielhaft beschrieben:

Der grundsätzliche Aufbau eines Fernwärmeleitungsnetzes ist anhand der stark vereinfachten Zeichnung dargestellt. In einem Heizkraftwerk 1 wird ein Wärmeträger, typischerweise Wasser erhitzt und mittels einer Pumpe 2 in ein Fernwärmeleitungsnetz 3 gespeist, welches eine zentrale Vorlaufleitung 4 aufweist, die in Vorlaufleitungen 4.1 und 4.2 mündet, über die Verbrauchsstellen 5 mit Wärme versorgt werden. Von den Verbrauchsstellen 5 führen entsprechende Rücklaufleitungen 6.1 und 6.2 in eine zentrale Rücklaufleitung 6 zurück zum Heizkraftwerk 1, wo sich der Kreislauf schließt. Sämtliche Leitungen 4, 6 weisen eine isolierende Ummantelung 7 auf. Die Verbrauchsstellen 5 sind entweder unmittelbar in das Leitungsnetz 3 eingebunden, wie dies früher üblich war oder aber über Wärmetauscher 8 eingebunden, wie dies heute üblich ist. Bei unmittelbarer Einbindung können innerhalb der Verbrauchsstellen 5 noch Umwälzpumpen vorgesehen sein, die in der Figur nicht im Einzelnen dargestellt sind. Bei Einsatz eines Wärmetauschers 8 ist sekundärseitig, also auf Seiten der Verbrauchsstelle 5 mindestens eine Umwälzpumpe 9 vorgesehen, welche die Wärme innerhalb des Hauses dorthin verteilt, wo sie benötigt wird.

Allen Verbrauchsstellen 5 gemein ist, dass sie einen Wärmemengenzähler 10 aufweisen, wie dies bei der Verbrauchsstelle 5.1 rechts unten in der Zeichnung schematisch dargestellt ist. Ein solcher Wärmemengenzähler 10 erfasst einerseits den Durchfluss, d.h. die Menge des Wärmeträgers, welche die Verbrauchsstelle 5 über die Vorlaufleitung 4.2 und die Rücklaufleitung 6.2 durchströmt. Weiter weisen sie einen ersten Temperatursensor T1, welcher die Temperatur in der Vorlaufleitung 4.2 bei Eintritt in die Verbrauchsstelle 5.1 erfasst sowie einen zweiten Temperatursensor T2, welcher die Temperatur des Wärmeträgers in der Rücklaufleitung 6.2 beim Austritt aus der Verbrauchsstelle 5 erfasst, auf. Darüber hinaus umfasst der Wärmemengenzähler 10 einen Drucksensor P1 sowie einen Beschleunigungssensor A1, welcher Bewegungen/Schwingungen der Leitung innerhalb des Wärmemengenzählers 10 erfasst.

Die Durchflussmenge wird im Wärmemengenzähler 10 durch einen Ultraschalldurchflussmesser erfasst, der die Geschwindigkeit des durchströmenden Wärmeträgers mit Hilfe akustischer Wellen erfasst und der mindestens einen Ultraschallsender und einen Ultraschallempfänger aufweist, die so angeordnet sind, dass das Ultraschallsignal die durchströmende Flüssigkeit durchsetzt. Typischerweise sind zwei Sender und zwei Empfänger vorgesehen. Wärmemengenzähler 10, die mit Ultraschalldurchflussmessern arbeiten, zählen zum Stand der Technik und werden daher hier nicht im Einzelnen beschreiben, es wird hier nur beispielhaft auf die unter der Typenbezeichnung Multical angebotenen Wärmemengenzähler der dänischen Firma Kamstrup A/S verwiesen, die nach diesem Prinzip arbeiten und welche anhand des Durchflusses und der Temperaturdifferenz der Temperatursensoren T1 und T2 die von der Verbrauchsstelle 5.1 abgenommen Wärmemenge ermitteln, speichern und drahtlos zur so genannten Head-End-Systems 11, also eine Datensammel- und Verarbeitungseinrichtung 11, übertragen.

Der Wärmemengenzähler 10 weist abweichend vom Stand der Technik einen Beschleunigungssensor A1 auf, welcher die über die Rohrleitung eingebrachten Schwingungen/Bewegungen erfasst, darüber hinaus einen Steueranschluss für ein in der Rücklaufleitung 6.2 angeordnetes Absperrventil V2 und eine Steuer- und Kommunikationselektronik, welche es ermöglicht, den Wärmemengenzähler 10 in einen Lecksuchemodus zu schalten, dabei akustische Daten über den im Ultraschalldurchflussmesser befindlichen Ultraschallempfänger zu empfangen, zu filtern, mit einem Zeitstempel zu versehen und zu gegebener Zeit an das Head-End-System 11 drahtlos zu übermitteln.

Um störende akustische Signale aus der Verbrauchstelle 5.1 wegzufiltern bestimmt der Wärmezähler 10 mittels der zwei eigebauten Ultraschallsensoren (nicht in der Figur gezeigt) die Richtung eines Signals. Solche Sensoren sitzen beabstandet, z.B. 10cm. Ein ankommendes Signal trifft den einen Sensor vor dem anderen und aus diesem Unterschied in der Zeit lässt sich die Richtung bestimmen. Das Signal kann dann gegebenenfalls weggefiltert werden, beispielsweise das von der Leckstelle 15 im Wärmeaustauscher 8.

Die Wärmemengenzähler 10 kommunizieren drahtlos mit dem Head-End-System 11, welches wiederum mit einer Steuerzentrale 12 datenverbunden ist, die hier ebenfalls heizkraftwerkseitig vorgesehen ist.

In der Figur ist eine Leckstelle 13 in der Vorlaufleitung 4.1 beispielhaft dargestellt. Zur Lecksuche sind hier beispielhaft zwei Gruppen A und B von Wärmemengenzählern 10 vorgesehen, die an unterschiedlichen Abschnitten des Fernwärmeleitungsnetzes 3 angeordnet sind. Diese Wärmemengenzähler 10 können drahtlos über das Head-End-System 11 von der Steuerzentrale 12 aus in den Lecksuchemodus geschaltet werden. Dies kann entweder zeitgleich erfolgen oder aber von den Ultraschalldurchflussmessern in den Wärmemengenzählern 10 gesteuert, wenn ein vorgegebener geringer Durchfluss erreicht ist oder aber der Durchfluss zum Erliegen kommt, z.B. durch Ansteuerung des Absperrventils V2 in der Rücklaufleitung 6.2 des Wärmemengenzählers 10 der Verbrauchsstelle 5.1. Grundsätzlich kann dieser Zustand auch über ein Ventil V1 von der Steuerzentrale 12 aus für die Rücklaufleitung 6 erreicht werden, was jedoch im normalen Heizbetrieb nicht möglich ist. In der Regel wird die Lecksuche dann erfolgen, wenn ein möglichst geringer Durchfluss erreicht ist und eine Ausfilterung von Fremdgeräuschen erfolgen, die typischerweise durch die hier beispielhaft dargestellten Pumpen 2 und 9 verursacht werden.

Da die Steuerung der Pumpe 2 über die Steuerzentrale 12 des Heizkraftwerks 1 erfolgt, kann diese ohne weiteres in die Lecksuche mittels der Wärmemengenzähler 10 eingebunden werden, derart, dass über diese Pumpe 2 ein sich zeitlich änderndes Druckprofil in das Fernwärmeleitungsnetz 3 aufgebracht wird, welches über die Drucksensoren P1 der Wärmemengenzähler 10 der Verbrauchsstellen 5 erfasst wird. Aufgrund dieses Druckprofils ist eine Zuordnung der von der Pumpe 2 im Leitungsnetz 3 erzeugten Pumpengeräusche möglich, es sind die Pumpengeräusche identifizierbar, die als Muster hinterlegt werden und beim späteren Messvorgang bei deren Auftreten identifiziert und ausgefiltert werden. Durch Ausfiltern dieser Fremdgeräusche ist es möglich, auch im laufenden Betrieb die Lecksuche durchzuführen.

Die hier symbolisch dargestellten Gruppen A und B, die an räumlich unterschiedlichen Orten des Fernwärmeleitungsnetzes 3 angeordnet sind, symbolisieren Gruppen von hunderten bis tausenden Wärmemengenzählern 10. Wie in der zeichnerischen Darstellung zu sehen ist, ist die Gruppe B gemessen an der Rohrlänge näher an der Leckstelle 13 als die Gruppe A, sodass sowohl bei Vergleich der Daten innerhalb der Gruppen A und B als auch durch Vergleich der Daten der Gruppen A und B eine gewissen regionale Tendenz, im Idealfall eine nahezu exakte räumliche Ortung der Leckstelle 13 möglich ist.

Aufgrund der Länge der Rohre des Fernwärmenetzes treten sogenannte "blind spots" auf, d.h. Rohrabschnitte wo ein Leck nicht "gehört" wird. In der Figur mag es sein das Wärmezähler 10 in der Verbrauchsstelle 5.1 die Leckage an der Leckstelle 13 hört. Allerdings ist dieses Leck in der Vorlaufleitung 4.1. Das ist ein großes Rohr, größer als die Hausleitung 4.3, das oft aus einem anderen Material, z.B. Kunststoff, besteht, und liegt auch relativ weit entfernt von der Verbraucherstelle 5.1. Das gemessene Signal wird schwach sein, falls überhaupt erfassbar. Um einen solchen "blind spot" hörbar zu machen kann ein sogenannter Geräuschlogger 14 auf dem Rohr 4.1 angebracht werden. Der Geräuschlogger 14 ist ein batteriebetriebenes Mikrofon und beinhaltet drahtlose Kommunikationselektronik. Er misst akustische Signale in der Hauptleitung. Mehrere Geräuschlogger können über die Länge der Leitung 4.1 und 4.2 angebracht werden und diese können entweder direkt mit den Wärmemengenzähler 10 oder der Steuerzentrale 12 kommunizieren. Die Geräuschlogger tragen mit deren Messung in einen Kombinationsverfahren mit den Wärmemengenzählern zur Ermittlung von Fremdgeräuschen und Leckgeräuschen bei.

### Bezugszeichenliste

- 1: Heizkraftwerk
- 2: Pumpe
- 3: Fernwärmeleitungsnetz
- 4: Vorlaufleitung
- 4.1, 4.2: Vorlaufleitungen
- 4.3: Hausleitung
- 5: Verbrauchsstelle
- 5.1: Verbrauchsstelle
- 6: Rücklaufleitung
- 6.1, 6.2: Rücklaufleitung
- 7: isolierende Ummantelung
- 8: Wärmetauscher
- 9: Umwälzpumpe
- 10: Wärmemengenzähler
- 11: Head-End-System/Datensammel- und Verarbeitungseinrichtung
- 12: Steuerzentrale
- 13: Leckstelle
- 14: Geräuschlogger
- 15: Leckstelle im Wärmetauscher
- T1: Temperatursensor
- T2: Temperatursensor
- P1: Drucksensor
- A1: Beschleunigungssensor
- V1: zentrales Absperrventil am Heizkraftwerk 1
- V2: Absperrventil im Rücklauf der Verbrauchsstelle 5.1

## Patentansprüche

1. Verfahren zur akustischen Lecksuche in einem Fernwärmeleitungsnetz (3), in dem ein Wärmeträger zwischen einem Heizkraftwerk (1) und Verbrauchsstellen (5) im Kreislauf geführt wird, wobei Verbrauchsstellen (5) Wärmemengenzähler (10) aufweisen, die mit Ultraschalldurchflussmessern arbeiten, die in einem Lecksuchemodus zur akustischen Lecksuche betreibbar sind, wobei die im Lecksuchemodus erfassten akustischen Signale zur Eliminierung von Fremdgeräuschen, insbesondere von Pumpengeräuschen gefiltert werden, wobei Fremdgeräusche anhand zuvor ermittelter akustischer Muster identifiziert und/oder hinsichtlich ihrer Richtung bestimmt und eliminiert werden, **dadurch gekennzeichnet, dass** eine Anzahl von Wärmemengenzählern (10) zur Lecksuche von einer Datensammel- und Verarbeitungseinrichtung (11) drahtlos in den Lecksuchemodus geschaltet werden und nach Übermittlung der Daten in den normalen Messmodus zurückgeschaltet werden oder selbsttätig in diesen rückgeführt werden.

2. Verfahren nach Anspruch 1, bei dem mindestens eine Gruppe (A, B) von Wärmemengenzählern (10) zur Lecksuche angesteuert wird, wobei die Lecksuche bei allen Ultraschalldurchflussmessern der zur Gruppe (A, B) gehörenden Wärmemengenzähler (10) gleichzeitig erfolgt, wenn der Durchfluss gestoppt ist.

3. Verfahren nach Anspruch 1, bei dem die Lecksuche mittels Ultraschalldurchflußmessern einer Gruppe (A, B) von Wärmemengenzählern (10) erfolgt, wobei die Messung in jedem Ultraschalldurchflussmesser vorzugsweise selbsttätig dann erfolgt, wenn dieser einen Durchflussstop oder ein Erreichen oder Unterschreiten eines vorbestimmten geringen Durchflusses detektiert hat.

4. Verfahren nach einem der vorhergehenden Ansprüche, bei dem zum Zwecke der Lecksuche der Durchfluss in mindestens Teilen des Fernwärmeleitungsnetzes oder verbraucherseitig vorzugsweise rücklaufseitig gesperrt wird.

5. Verfahren nach einem der vorhergehenden Ansprüche, bei dem zumindest ein Teil des Fernwärmeleitungsnetzes (3) während der akustischen Lecksuche mit einem sich über die Zeit ändernden Druck, vorzugsweise einem vorgegebenen Druckprofil beaufschlagt wird.

6. Verfahren nach einem der vorhergehenden Ansprüche, bei dem die Ultraschalldurchflussmesser im Lecksuchemodus akustische Signale im Frequenzbereich zwischen 10 Hz und 10 kHz erfassen.

7. Verfahren nach einem der vorhergehenden Ansprüche, bei dem die von den Wärmemengenzählern (10) im Lecksuchemodus ihrer Ultraschalldurchflussmesser erfassten Daten drahtlos an die Datensammel- und Verarbeitungseinrichtung (11) übermittelt werden.

8. Verfahren nach einem der vorhergehenden Ansprüche, bei dem mindestens eine Pumpe (2, 9) zur Erfassung der bei ihrem Betrieb entstehenden akustischen Signale vorzugsweise im Lecksuchemodus des Ultraschalldurchflußmessers angesteuert wird, wobei das Ultraschalldurchflußmesserseitig erfasste Signal zur Ausfilterung dieses Pumpengeräusches verwendet wird.

9. Verfahren nach Anspruch 8, bei dem zur Pumpengeräuschermittlung eine Datenkommunikation zwischen der mindestens einen Pumpe (2, 9), dem mindestens einen Ultraschalldurchflussmesser und einem externen vorzugsweise drahtlos verbundenen Steuergerät erfolgt.

10. Verfahren nach einem der vorhergehenden Ansprüche, wobei nur die Fremdgeräusche eliminiert werden, die aus Richtung der Verbrauchsstelle (5) kommen.

11. Verfahren nach einem der vorhergehenden Ansprüche, bei dem die von den Wärmemengenzählern (10) übermittelten Leckortungsdaten in der Datensammel- und Verarbeitungseinrichtung (11) unter Berücksichtigung der räumlichen Anordnung der zugehörigen Wärmemengenzähler (11), insbesondere ihrer GPS-Daten zur räumlichen Bestimmung der Leckagestelle (13) ausgewertet werden.

12. Verfahren nach einem der vorhergehenden Ansprüche, bei dem die Leckortung mittels mehrerer Gruppen (A, B) von Wärmemengenzählern (10) erfolgt, wobei eine Gruppe vorzugsweise zwischen 10 bis 1000 räumlich zusammenhängende Wärmemengenzähler (10) umfasst.

13. Verfahren nach einem der vorhergehenden Ansprüche, bei dem für eine Gruppe (A, B) von Wärmemengenzähler (10) bei der akustischen Signalerfassung zur Leckortung ein Grundrauschen bestimmt und ausgefiltert wird.

14. Verfahren nach einer der vorhergehenden Ansprüche bei dem hauptleitungsseitig (4.1) angebrachte Geräuschlogger (14) akustische Signale zur Steuerzentrale (12) übermitteln um diese akustischen Signale zusammen mit akustischen Signalen von den Wärmemengenzählern (10) zur Eliminierung von Fremdgeräuschen benutzt werden.

15. Verfahren nach einem der vorgehenden Ansprüche bei dem die akustische Lecksuche während eines Durchflusses in einer Leitung, insbesondere einer Hauptleitung (4.3) oder Vorlaufleitung (4.1, 4.2) durchgeführt wird.

16. Wärmemengenzähler, der mit Ultraschalldurchflussmessern arbeitet, zur Ausführung des Verfahrens nach einerr der vorhergehenden Ansprüche, bei dem eine Sende- und Empfangseinheit zur drahtlosen bidirektionalen Kommunikation mit einer Datensammel- und Verarbeitungseinrichtung (11) vorgesehen ist.

17. Wärmemengenzähler nach Anspruch 16, bei dem ein Steueranschluss für ein Absperrventil vorgesehen ist oder der ein Absperrventil aufweist, und/oder ein Beschleunigungssensor (A1) vorgesehen ist.

## Claims

1. A method for the acoustic leak detection in a district heat supply network (3), in which a heat transfer medium is circulated between a combined heat and power plant (1) and points of usage (5), wherein points of usage (5) have heat meters (10), which operate with ultrasonic flow meters, which can be operated in a leak detection mode for the acoustic leak detection, wherein the acoustic signals detected in the leak detection mode are filtered to eliminate extraneous noises, in particular pump noises, wherein extraneous noises are identified on the basis of previously established acoustic patterns and/or are determined and eliminated with regard to the direction thereof, **characterized in that** a data collection and processing means (11) wirelessly connects a number of heat meters (10) into the leak detection mode for the leak detection and switches them back into the normal measuring mode after transmission of the data or they are automatically returned back into said normal measuring mode.

2. The method according to claim 1, wherein at least one group (A, B) of heat meters (10) is controlled for the leak detection, wherein the leak detection takes place simultaneously in the case of all ultrasonic flow meters of the heat meters (10) belonging to the group (A, B) when the flow is stopped.

3. The method according to claim 1, wherein the leak detection takes place by means of ultrasonic flow meters of a group (A, B) of heat meters (10), wherein the measurement preferably takes place automatically in each ultrasonic flow meter when the latter has detected a flow stoppage or a reaching or falling below of a predetermined low flow.

4. The method according to one of the preceding claims, wherein the flow is blocked at least in portions of the district heating supply network or on the consumer side preferably on the return side, for the purpose of the leak detection.

5. The method according to one of the preceding claims, wherein a pressure, which changes over time, preferably a specified pressure profile, is applied to at least a portion of the district heating supply network (3) during the acoustic leak detection.

6. The method according to one of the preceding claims, wherein the ultrasonic flow meters detect acoustic signals in the frequency range between 10 Hz and 10 kHz in the leak detection mode.

7. The method according to one of the preceding claims, wherein the data collected by the heat meters (10) in the leak detection mode of the ultrasonic flow meters thereof is wirelessly transmitted to the data collection and processing means (11).

8. The method according to one of the preceding claims, wherein at least one pump (2, 9) for detecting the acoustic signals created during the operation thereof is preferably controlled in the leak detection mode of the ultrasonic flow meter, wherein the signal detected on the ultrasonic flow meter side is used for filtering out this pump noise.

9. The method according to claim 8, wherein a data communication between the at least one pump (2, 9), the at least one ultrasonic flow meter and an external preferably wirelessly connected control device takes place for the pump noise determination.

10. The method according to one of the preceding claims, wherein only the extraneous noises, which come from the direction of the point of use (5), are eliminated.

11. The method according to one of the preceding claims, wherein the leak location data transmitted by the heat meters (10) is evaluated in a data collection and processing means (11) in consideration of the spatial arrangement of the corresponding heat meters (11), in particular the GPS data thereof, for spatially determining the leakage point (13).

12. The method according to one of the preceding claims, wherein the leak location takes place by means of several groups (A, B) of heat meters (10), wherein one group preferably comprises between 10 to 1000 spatially linked heat meters (10).

13. The method according to one of the preceding claims, wherein a background noise is determined and filtered out for a group (A, B) of heat meters (10) during the acoustic signal detection for the leak location.

14. The method according to one of the preceding claims, wherein noise loggers (14), which are attached on the main line side (4.1), transmit acoustic signals to the control center (12), in order to use said acoustic signals together with acoustic signals from the heat meters (10) to eliminate extraneous noises.

15. The method according to one of the preceding claims, wherein the acoustic leak detection is carried out during a flow in a line, in particular a main line (4.3) or feed line (4.1, 4.2).

16. A heat meter, which operates with ultrasonic flow meters, for carrying out the method according to one of the preceding claims, wherein a transmission and receiving unit is provided for the wireless bidirectional communication with a data collection and processing means (11).

17. The heat meter according to claim 16, wherein a control connection is provided for a shut-off valve or which has a shut-off valve, and/or an acceleration sensor (A1) is provided.

## Revendications

1. Procédé de détection acoustique de fuites dans un réseau de chauffage urbain (3), dans lequel un fluide caloporteur circule entre une centrale thermique (1) et des points de consommation (5), dans lequel des points de consommation (5) sont équipés de compteurs de quantité de chaleur (10), qui fonctionnent avec des débitmètres à ultrasons, qui peuvent être exploités en mode de détection acoustique de fuites, dans lequel les signaux acoustiques détectés en mode de détection de fuites sont filtrés afin d'éliminer les bruits parasites, notamment les bruits de pompe, dans lequel les bruits parasites sont identifiés à partir de modèles acoustiques préalablement déterminés et/ou leur direction est déterminée et éliminée, **caractérisé en ce qu'**une pluralité de compteurs de quantité de chaleur (10) sont commutés sans fil en mode de détection de fuites par un dispositif d'acquisition et de traitement de données (11) et, après la transmission des données, repassent en mode de mesure normal ou y reviennent automatiquement.

2. Procédé selon la revendication 1, dans lequel au moins un groupe (A, B) de compteurs de quantité de chaleur (10) est activé pour la détection de fuites, dans lequel la détection de fuites est effectuée simultanément sur tous les débitmètres à ultrasons des compteurs de quantité de chaleur (10) appartenant au groupe (A, B) lorsque le débit est interrompu.

3. Procédé selon la revendication 1, dans lequel la détection de fuites est effectuée au moyen des débitmètres à ultrasons d'un groupe (A, B) de compteurs de quantité de chaleur (10), dans lequel la mesure sur chaque débitmètre à ultrasons est effectuée de préférence automatiquement lorsque celui-ci détecte une interruption de débit ou lorsque le débit atteint ou descend en dessous d'un seuil minimal prédéterminé.

4. Procédé selon une des revendications précédentes, dans lequel, à des fins de détection de fuites, le débit est interrompu sur au moins des parties du réseau de chauffage urbain soit côté consommateur, de préférence, soit côté retour.

5. Procédé selon une des revendications précédentes, dans lequel au moins une partie du réseau de chauffage urbain (3) est soumise à une pression variable dans le temps, de préférence selon un profil de pression prédéterminé, pendant la détection acoustique de fuites.

6. Procédé selon une des revendications précédentes, dans lequel les débitmètres à ultrasons, en mode de détection de fuites, acquièrent des signaux acoustiques dans la plage de fréquences comprise entre 10 Hz et 10 kHz.

7. Procédé selon une des revendications précédentes, dans lequel les données détectées par les compteurs de quantité de chaleur (10) en mode de détection de fuites de leurs débitmètres à ultrasons sont transmises sans fil au dispositif d'acquisition et de traitement des données (11).

8. Procédé selon une des revendications précédentes, dans lequel au moins une pompe (2, 9) est de préférence commandée en mode de détection de fuites du débitmètre à ultrasons afin de détecter les signaux acoustiques générés pendant son fonctionnement, dans lequel le signal détecté du côté du débitmètre à ultrasons est utilisé pour filtrer ce bruit de pompe.

9. Procédé selon la revendication 8, dans lequel, pour déterminer le bruit de pompe, une communication de données a lieu entre au moins une pompe (2, 9), au moins un débitmètre à ultrasons, et un dispositif de commande externe, de préférence sans fil.

10. Procédé selon une des revendications précédentes, dans lequel seuls les bruits parasites provenant de la direction du point de consommation (5) sont éliminés.

11. Procédé selon une des revendications précédentes, dans lequel les données de localisation de fuite transmises par les compteurs de quantité de chaleur (10) sont évaluées par le dispositif d'acquisition et de traitement des données (11), en tenant compte de la disposition spatiale des compteurs de quantité de chaleur (11) associés, notamment de leurs données GPS, pour la détermination spatiale de l'emplacement de la fuite (13).

12. Procédé selon une des revendications précédentes, dans lequel la détection de fuite est effectuée au moyen de plusieurs groupes (A, B) de compteurs de quantité de chaleur (10), dans lequel un groupe comprend de préférence entre 10 et 1000 compteurs de quantité de chaleur (10) spatialement connectés.

13. Procédé selon une des revendications précédentes, dans lequel un bruit de fond est déterminé et filtré pour un groupe (A, B) de compteurs de quantité de chaleur (10) lors de l'acquisition de signaux acoustiques pour la localisation de fuites.

14. Procédé selon une des revendications précédentes, dans lequel des enregistreurs de bruit (14) montés du côté de conduite principale (4.1) transmettent des signaux acoustiques au centre de contrôle (12) afin d'utiliser ces signaux acoustiques conjointement aux signaux acoustiques provenant des compteurs de quantité de chaleur (10) pour éliminer les bruits parasites.

15. Procédé selon une des revendications précédentes, dans lequel la détection acoustique de fuites est effectuée pendant un passage de fluide dans une conduite, notamment une conduite principale (4.3) ou une conduite d'alimentation (4.1, 4.2).

16. Compteur de quantité de chaleur, qui fonctionne avec des débitmètres à ultrasons, pour la mise en œuvre du procédé selon une des revendications précédentes, dans lequel une unité d'émission-réception est prévue pour une communication bidirectionnelle sans fil avec un dispositif de collecte et de traitement de données (11).

17. Compteur de quantité de chaleur selon la revendication 16, dans lequel un raccord de commande pour une vanne d'arrêt est prévu ou présente une vanne d'arrêt et/ou un capteur d'accélération (A1) est prévu.
